# EUROPEAN PATENT APPLICATION

(11) **EP 4 554 195 A1**
(43) Date of publication of application: **14.05.2025**
(21) Application number: 23909341.2
(22) Date of filing: 12.09.2023
(51) Int. Cl.: H04M 1/02, G06F 1/16

(54) **FOLDING APPARATUS AND ELECTRONIC DEVICE**

(30) Priority: 30.12.2022 CN 202211738027
(71) Applicant: Huawei Technologies Co., Ltd., Shenzhen, Guangdong 518129 (CN)
(72) Inventor: LIN, Yangming, Shenzhen, Guangdong 518129 (CN); ZHOU, Yaao, Shenzhen, Guangdong 518129 (CN); CHEN, Yuan, Shenzhen, Guangdong 518129 (CN)
(74) Representative: Körber, Martin Hans
(86) International application number: PCT/CN2023/118285
(87) International publication number: WO 2024/139404

(57) **Abstract**

This application relates to a foldable apparatus and an electronic device. The foldable apparatus includes: a main shaft; a rotating arm, including a first rotating arm and a second rotating arm that are disposed on two sides of the main shaft along a width direction; a synchronization gear assembly, connected to the first rotating arm and the second rotating arm, and having a concave-convex surface; a force applying assembly, including a cam and an elastic member, where the cam has a cam surface, and two ends of the elastic member are elastically connected to the cam along a length direction of the main shaft, to drive the concave-convex surface to be capable of being engaged with the cam surface; a damping assembly, including a first friction plate connected to the main shaft, where when the concave-convex surface is engaged with the cam surface, the elastic member is capable of applying pressure to the damping assembly, so that the foldable apparatus is kept in an intermediate state under the action of a friction force between the first friction plate and the rotating arm; and a clutch member, where in a process in which the foldable apparatus switches between an unfolded state and a folded state, the clutch member is capable of fitting the rotating arm and/or the synchronization gear assembly, so that the concave-convex surface is disengaged from the cam surface. Therefore, performance of the foldable apparatus and the electronic device is improved.

## Description

This application claims priority to Chinese Patent Application No. 202211738027.1, filed with the China National Intellectual Property Administration on December 30, 2022 and entitled "FOLDABLE APPARATUS AND ELECTRONIC DEVICE", which is incorporated herein by reference in its entirety.

### TECHNICAL FIELD

This application relates to the field of electronic device technologies, and in particular, to a foldable apparatus and an electronic device.

### BACKGROUND

A foldable electronic device includes a housing, a foldable apparatus, and a flexible display. The housing includes a left housing and a right housing that are disposed separately, a foldable component is located between the left housing and the right housing, and the flexible display is mounted on the left housing and the right housing. When the left housing and the right housing are folded under driving of the foldable component, the flexible display can be driven to fold, so that the electronic device is in a folded state. In the folded state, a size of the electronic device is small, so that the electronic device is easy to accommodate and store. When the left housing and the right housing are unfolded under driving of the foldable component, the flexible display is driven to unfold, so that the electronic device is in an unfolded state. In the unfolded state, the display of the electronic device is large, and user experience can be improved.

Currently, the foldable electronic device can implement two states: unfolded state and folded state, but cannot implement a state of staying between the unfolded state and the folded state. Consequently, performance of the foldable electronic device is poor.

### SUMMARY

This application provides a foldable apparatus. The foldable apparatus includes: a main shaft; a rotating arm, where the rotating arm includes a first rotating arm and a second rotating arm that are disposed on two sides of the main shaft along a width direction, and the first rotating arm and the second rotating arm are capable of rotating relative to the main shaft, so that the foldable apparatus switches between an unfolded state and a folded state; a synchronization gear assembly, where the synchronization gear assembly is connected to the first rotating arm and the second rotating arm, and the synchronization gear assembly has a concave-convex surface; a force applying assembly, where the force applying assembly includes a cam and an elastic member, the cam has a cam surface, and two ends of the elastic member are elastically connected to the cam along a length direction of the main shaft, to drive the concave-convex surface to be capable of being engaged with the cam surface; a damping assembly, where the damping assembly includes a first friction plate connected to the main shaft, and when the concave-convex surface is engaged with the cam surface, the elastic member is capable of applying pressure to the damping assembly, so that the foldable apparatus is kept in an intermediate state under the action of a friction force between the first friction plate and the rotating arm; and a clutch member, where in a process in which the foldable apparatus switches between the unfolded state and the folded state, the clutch member is capable of fitting the rotating arm and/or the synchronization gear assembly, so that the concave-convex surface is disengaged from the cam surface.

In this embodiment, during rotation of the first rotating arm and the second rotating arm, when the cam surface of the cam is engaged with the concave-convex surface of the synchronization gear assembly, there is pressure between the cam and the synchronization gear assembly engaged with the cam, and the pressure can be transferred between the rotating arm and the first friction plate. In this way, in a process in which the first rotating arm and the second rotating arm rotate relative to the first friction plate, the rotating arm is in direct or indirect contact with the first friction plate, so that there is a friction force between the rotating arm and the first friction plate. Under the action of the friction force, the foldable apparatus can be kept in the intermediate state, performance of the foldable apparatus and an electronic device can be improved, and a use requirement of a user in the intermediate state is met. In addition, the foldable apparatus further includes a clutch member. In a process of switching of the foldable apparatus between the unfolded state and the folded state, the clutch member can fit the rotating arm and/or the synchronization gear assembly, so that the concave-convex surface of the synchronization gear assembly is disengaged from the cam surface of the cam, that is, there is a gap between the concave-convex surface and the cam surface. In this case, an elastic force of the elastic member cannot be applied to the synchronization gear assembly through the cam, so that the elastic force of the elastic member cannot be converted into pressure applied between the rotating arm and the first friction plate. In a process in which the rotating arm rotates relative to the first friction plate, because there is no pressure or the pressure is very small between the rotating arm and the first friction plate, a friction force between the rotating arm and the first friction plate is very small, so that an external force required for switching of the foldable apparatus between the unfolded state and the folded state is relatively small, and the user needs only to provide a relatively small closing force or flattening force to implement self-closing or self-flattening of the foldable apparatus and the electronic device. In addition, an external force required for releasing a closed state or a flattened state is also relatively small, thereby improving operation experience.

In a specific embodiment, when an included angle between the first rotating arm and the second rotating arm is 160° to 180°, or an included angle between the first rotating arm and the second rotating arm is 0° to 20°, the clutch member fits the synchronization gear assembly or the rotating arm, so that the concave-convex surface is disengaged from the cam surface.

In this embodiment, when the included angle between the first rotating arm and the second rotating arm is 160° to 180°, that is, when an included angle between the first housing and the second housing in the electronic device is 160° to 180°, the foldable apparatus is in a near-flattened state. In this case, under the action of the clutch member, the concave-convex surface of the synchronization gear assembly is disengaged from the cam surface of the cam, and the elastic force of the elastic member cannot be transferred to the synchronization gear assembly through the cam, and therefore cannot be transferred between the rotating arm and the first friction plate, so that the friction force between the rotating arm and the first friction plate is eliminated or reduced, and the foldable apparatus can be automatically flattened. Similarly, when the included angle between the first rotating arm and the second rotating arm is 0° to 20°, that is, when an included angle between the first housing and the second housing in the electronic device is 0° to 20°, the foldable apparatus is in a near-folded state. In this case, under the action of the clutch member, the concave-convex surface of the synchronization gear assembly is disengaged from the cam surface of the cam, and the elastic force of the elastic member cannot be transferred to the synchronization gear assembly through the cam, and therefore cannot be transferred between the rotating arm and the first friction plate, so that the friction force between the rotating arm and the first friction plate is eliminated or reduced, and the foldable apparatus can be automatically folded. Therefore, the clutch member in embodiments of this application can improve operation experience of the foldable apparatus and the electronic device in the near-flattened state and the near-folded state.

In a specific embodiment, the clutch member includes a driving portion, and in the process in which the foldable apparatus switches between the unfolded state and the folded state, the driving portion is capable of fitting the synchronization gear assembly to push the synchronization gear assembly to move away from the cam along the length direction of the main shaft, so that the concave-convex surface is disengaged from the cam surface. In this embodiment, when the foldable apparatus is in the near-flattened state or the near-folded state, the clutch member can push the synchronization gear assembly, so that the synchronization gear assembly moves away from the cam along the length direction, and a gap t exists between the concave-convex surface of the synchronization gear assembly and the cam surface of the cam. In this case, the elastic force of the elastic member acts on the cam. Because of the gap t, the elastic force cannot act on the synchronization gear assembly, and cannot act on the first rotating arm and the second rotating arm that are connected to the synchronization gear assembly.

In a specific embodiment, the driving portion is disposed on the damping assembly, the synchronization gear assembly is provided with a fitting portion, and the driving portion is capable of fitting the fitting portion to push the synchronization gear assembly to move away from the cam along the length direction of the main shaft; and along the length direction of the main shaft, the fitting portion and the concave-convex surface are disposed at two ends of the synchronization gear assembly.

In this embodiment, when the foldable apparatus is in the near-flattened state or the near-folded state, the driving portion of the damping assembly fits the fitting portion of the synchronization gear assembly to push the synchronization gear assembly away from the cam, so that the elastic force of the elastic member cannot be transferred to the rotating arm through the cam. There is no friction force or the friction force is relatively small between the first friction plate and the second friction plate, operation resistance of the foldable apparatus in the near-flattened state or the near-folded state can be reduced, and this helps implement self-flattening and self-folding of the foldable apparatus. When the foldable apparatus is in another position (for example, the included angle between the first rotating arm and the second rotating arm is 20° to 160°), the driving portion does not fit the fitting portion. In this case, the concave-convex surface of the synchronization gear assembly is engaged with the cam surface of the cam, and the elastic force of the elastic member in the compressed state can be applied to the synchronization gear assembly through the cam, and transferred between the second friction plate and the first friction plate. A friction force of the second friction plate and the first friction plate provides resistance for rotation of the rotating arm, so that the foldable apparatus is kept in the intermediate state.

In a specific embodiment, the driving portion protrudes relative to the damping assembly along the length direction of the main shaft, the driving portion includes a first convex surface and a first concave surface, the fitting portion includes a second convex surface and a second concave surface, and when the first convex surface fits the second convex surface, the synchronization gear assembly is capable of being pushed to move away from the cam along the length direction of the main shaft. In this embodiment, the driving portion and the fitting portion are also of a concave-convex structure. In a process in which the rotating arm rotates relative to the main shaft, a position in which the driving portion fits the fitting portion can be changed, so that when the first convex surface of the driving portion fits the second convex surface of the fitting portion, the synchronization gear assembly is pushed away from the cam. When surfaces other than the first convex surface and the second convex surface fit, the driving portion does not push the synchronization gear assembly away from the cam. Therefore, the concave-convex structure of the driving portion and the fitting portion facilitates clutching of the synchronization gear assembly and the cam, and the structure is simple.

In a specific embodiment, the damping assembly includes a support fastened to the main shaft, and the first friction plate is mounted on the support; and the driving portion is disposed on the support. The support and the first gear and the second gear that are of the synchronization gear assembly are distributed along the length direction of the main shaft. In this case, the driving portion is disposed at two ends of the support along the length direction, to facilitate fitting with the fitting portion disposed on the synchronization gear assembly.

In a specific embodiment, the synchronization gear assembly includes a first gear and a second gear that are disposed along the width direction of the main shaft, the first gear is engaged with the second gear, the first rotating arm has a first tooth portion, the second rotating arm has a second tooth portion, the first gear is engaged with the first tooth portion, and the second gear is engaged with the second tooth portion; and the fitting portion is disposed on the first gear and/or the second gear.

In a specific embodiment, the clutch member includes a first limiting portion, a second limiting portion is disposed on the rotating arm and/or the synchronization gear assembly, and in the process in which the foldable apparatus switches between the unfolded state and the folded state, the first limiting portion is capable of fitting the second limiting portion, to limit the synchronization gear assembly from moving toward the cam.

In this embodiment, when the foldable apparatus is in the near-flattened state or the near-folded state, the clutch member can limit the synchronization gear assembly and/or the rotating arm from moving toward the cam, so that a gap t exists between the concave-convex surface of the synchronization gear assembly and the cam surface of the cam. In this case, the elastic force of the elastic member acts on the cam. Because of the gap t, the elastic force cannot act on the synchronization gear assembly, and cannot act on the first rotating arm and the second rotating arm that are connected to the synchronization gear assembly. There is no friction force or the friction force is relatively small between the first friction plate and the second friction plate, so that operating resistance of the foldable apparatus in the near-flattened state or the near-folded state can be reduced, and this helps implement self-flattening and self-folding of the foldable apparatus. When the foldable apparatus is in another position (for example, the included angle between the first rotating arm and the second rotating arm is 20° to 160°), the driving portion does not fit the fitting portion. In this case, the concave-convex surface of the synchronization gear assembly is engaged with the cam surface of the cam, and the elastic force of the elastic member in the compressed state can be applied to the synchronization gear assembly through the cam, and transferred between the second friction plate and the first friction plate. A friction force of the second friction plate and the first friction plate provides resistance for rotation of the rotating arm, so that the foldable apparatus is kept in the intermediate state.

In a specific embodiment, the main shaft includes a plurality of pin shafts distributed along the width direction of the main shaft, the rotating arm and the synchronization gear assembly each are provided with a pin shaft hole, the pin shafts respectively pass through corresponding pin shaft holes, and the first limiting portion is provided on at least a part of the pin shafts.

In a specific embodiment, the first limiting portion protrudes outward along a radial direction relative to the pin shaft, a limiting step is disposed in at least a part of the pin shaft holes, and the limiting step is the second limiting portion.

In a specific embodiment, the damping assembly further includes a second friction plate, an end of the second friction plate is connected to the rotating arm, another end of the second friction plate is connected to the first friction plate, and the second friction plate is capable of rotating relative to the first friction plate under driving of the rotating arm; and when the concave-convex surface is engaged with the cam surface, the elastic member is capable of applying pressure to the damping assembly. Under the action of the friction force between the first friction plate and the second friction plate, rotation of the second friction plate can be prevented, thereby preventing rotation of the first rotating arm and the second rotating arm, so that the foldable apparatus is kept in the intermediate state. In addition, during rotation of the first rotating arm and the second rotating arm, the first friction plate is always in contact with the second friction plate. When the cam surface of the cam is engaged with the concave-convex surface of the synchronization gear assembly, a friction force always exists between the first friction plate and the second friction plate, so that the foldable apparatus can be kept in an intermediate state at any angle.

In this embodiment, the friction force between the first friction plate and the second friction plate prevents the second friction plate from moving, thereby preventing rotation of the first rotating arm and the second rotating arm, to keep the foldable apparatus in the intermediate state. In this case, the first friction plate does not need to be in direct contact with the first rotating arm and the second rotating arm, so that a size of the first friction plate can be reduced, the first friction plate is easy to arrange, and space of the foldable apparatus occupied by the first friction plate is reduced.

In a specific embodiment, the damping assembly further includes a guide shaft extending along the length direction of the main shaft, the rotating arm has a guide hole, and the guide shaft passes through the guide hole, so that the rotating arm is capable of moving along the guide shaft. The guide shaft is configured to guide movement of the first rotating arm and the second rotating arm along the length direction of the main shaft, thereby improving reliability and stability of movement of the first rotating arm and the second rotating arm along the length direction of the main shaft.

A second aspect of embodiments of this application provides an electronic device. The electronic device includes a screen and the foregoing foldable apparatus.

It should be understood that the foregoing general descriptions and the following detailed descriptions are merely used as an example, and should not limit this application.

### BRIEF DESCRIPTION OF DRAWINGS

FIG. 1 is a diagram of a structure of an electronic device in a specific embodiment according to this application, where a foldable apparatus is in an unfolded state;
FIG. 2 is a front view of FIG. 1;
FIG. 3 is a diagram of a structure of the electronic device in FIG. 2 in a folded state;
FIG. 4 is a diagram of a structure of the electronic device in FIG. 1 in an intermediate state in a specific embodiment;
FIG. 5 is a diagram of a structure of the electronic device in FIG. 1 in an intermediate state in another specific embodiment;
FIG. 6 is a diagram of a structure of the electronic device in FIG. 1 moving from a near-flattened state to an unfolded state;
FIG. 7 is a diagram of a structure of the electronic device in FIG. 1 moving from a near-folded state to a folded state;
FIG. 8 is a partial sectional view of FIG. 2;
FIG. 9 is an exploded view of the foldable apparatus in FIG. 8 in a specific embodiment;
FIG. 10 is a diagram of a partial structure of the foldable apparatus in FIG. 8;
FIG. 11 is a top view of FIG. 10;
FIG. 12 is a diagram of a structure of the damping assembly in FIG. 9;
FIG. 13 is a diagram of a structure of fitting between the synchronization gear assembly and the cam in FIG. 11;
FIG. 14 is a top view of FIG. 12;
FIG. 15 is a diagram of a structure of the support and the first friction plate in FIG. 12;
FIG. 16 is a diagram of a structure of the second friction plate in FIG. 12;
FIG. 17 is an exploded view of the foldable apparatus in FIG. 8 in another specific embodiment;
FIG. 18 is a sectional view of FIG. 17;
FIG. 19 is a sectional view of the rotating arm and the synchronization gear assembly in FIG. 18;
FIG. 20 is a top view of FIG. 17;
FIG. 21 is a partial enlarged diagram of the part I in FIG. 20;
FIG. 22 is a diagram of a structure of the rotating arm and the synchronization gear assembly in FIG. 18; and
FIG. 23 is a diagram of a structure of the damping assembly in FIG. 17.

Reference numerals:
10: foldable apparatus; 20: flexible display; 30: first housing; 40: second housing;
1: main shaft;
   11: pin shaft;
      111: first limiting portion;
      112: mounting slot;
   12: stopper;
   21: first rotating arm;
      211: first tooth portion;
         211a: first concave-convex surface;
      212: first sliding block;
      213: first guide hole;
      214: first pin shaft hole;
         214a: first limiting step;
   22: second rotating arm;
      221: second tooth portion;
         221a: second concave-convex surface;
      222: second sliding block;
      223: second guide hole;
      224: second pin shaft hole;
         224a: second limiting step;
3: damping assembly;
   31: first friction plate;
      311: sixth pin shaft hole;
   32: second friction plate;
      321: fifth pin shaft hole;
      322: third guide hole;
   33: support;
      331: driving portion;
   34: guide shaft;
      341: gasket;
4: synchronization gear assembly;
   41: first gear;
      411: third concave-convex surface;
      412: first fitting portion;
      413: third pin shaft hole;
         413a: third limiting step;
      42: second gear;
         421: second fitting portion;
         422: sixth concave-convex surface;
         423: fourth pin shaft hole;
            423a: fourth limiting step;
5: force applying assembly;
   51: elastic member;
   52: cam;
      521: first cam surface;
      522: second cam surface;
      523: third cam surface;
      524: fourth cam surface.

The accompanying drawings herein are incorporated into this specification and constitute a part of this specification, to show embodiments in accordance with this application, and are used together with this specification to explain the principle of this application.

### DESCRIPTION OF EMBODIMENTS

To better understand the technical solutions of this application, the following describes embodiments of this application in detail with reference to the accompanying drawings.

In a specific embodiment, the following further describes this application in detail with reference to specific embodiments and the accompanying drawings.

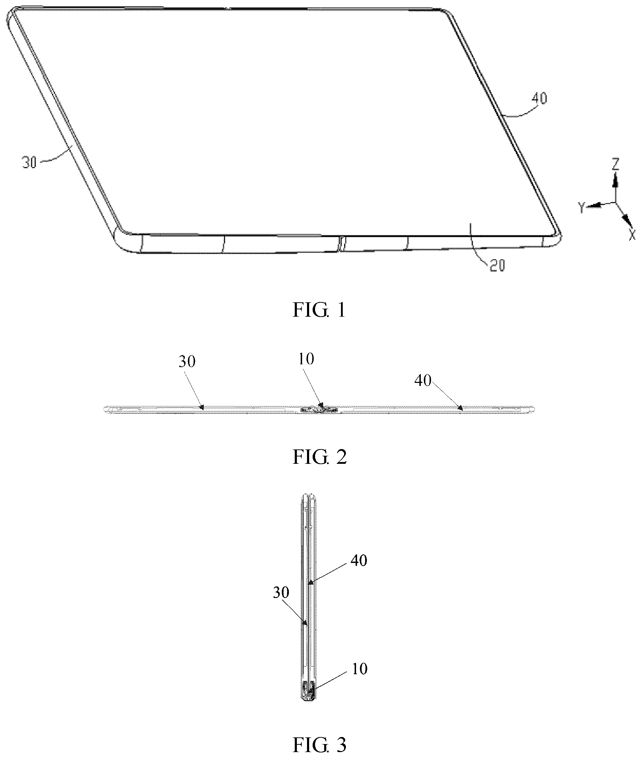

An embodiment of this application provides an electronic device. An embodiment of this application provides an electronic device shown in FIG. 1 to FIG. 7. The electronic device includes any device having a foldable screen function, for example, a mobile phone, a tablet computer, a personal digital assistant (personal digital assistant, PDA), a notebook computer, a vehicle-mounted computer, a foldable display device, a foldable display, or a wearable device. A specific form of the foregoing electronic device is not specially limited in embodiments of this application. For ease of description, the following uses an example in which the electronic device is a mobile phone for description. The following describes the electronic device in this application by using specific embodiments.

As shown in FIG. 1 to FIG. 7, the electronic device includes a foldable apparatus 10, a screen, a first housing 30, and a second housing 40. The screen may be a flexible display 20, and the flexible display 20 is configured to display an image, a video, and the like. A specific type of the flexible display 20 in this application is not limited. For example, the flexible display 20 may be an active-matrix organic light-emitting diode (active-matrix organic light-emitting diode, AMOLED) display. The AMOLED display serves as a self-luminous display, and a backlight module (backlight module, BLM) does not need to be disposed. Therefore, when a substrate of the AMOLED display is made of a flexible resin material such as polyethylene terephthalate (polyethylene terephthalate, PET), the AMOLED display can have a bendable characteristic. For example, the flexible display 20 may alternatively be an organic light-emitting diode (organic light-emitting diode, OLED) display, a mini light-emitting diode (mini organic light-emitting diode) display, a micro light-emitting diode (micro organic light-emitting diode) display, a micro organic light-emitting diode (micro organic light-emitting diode) display, a quantum dot light-emitting diode (quantum dot light-emitting diode, QLED) display, or the like.

As shown in FIG. 1, the first housing 30 and the second housing 40 are spaced apart. The first housing 30 and the second housing 40 are configured to mount components such as a battery, a circuit board, a camera, a headset, an earpiece, a button, and a battery of the electronic device. The first housing 30 includes a first middle frame and a first rear cover, the second housing 40 includes a second middle frame and a second rear cover, and the first middle frame and the second middle frame are configured to bear the flexible display 20, that is, the flexible display 20 is fastened (for example, pasted) to the first middle frame and the second middle frame, so that the flexible display 20 is kept as flat as possible in a use process, and a non-display surface of the flexible display 20 is protected. The first rear cover and the second rear cover are configured to protect components in the first housing 30 and the second housing 40. The foldable apparatus 10 is located between the first housing 30 and the second housing 40, and is connected to the first housing 30 and the second housing 40. In some embodiments, the first housing 30 is provided with a first groove, the second housing 40 is provided with a second groove, a part of the foldable apparatus 10 is mounted in the first groove, and another part of the foldable apparatus 10 is mounted in the second groove. In some possible implementations, the foldable apparatus 10 may be connected to the first groove and the second groove through a screw or the like.

In a process of using the electronic device, the foldable apparatus 10 includes at least an unfolded state shown in FIG. 2 and a folded state shown in FIG. 3. In the unfolded state, the first housing 30 and the second housing 40 are roughly located on a same plane, so that the flexible display 20 is roughly planar. In this case, the flexible display 20 is exposed, a user can operate the flexible display 20, and the flexible display 20 can display information such as an image or a video, to implement large-screen display and improve viewing experience of the user. In addition, when the foldable apparatus 10 is in the unfolded state, the first housing 30 and the second housing 40 can rotate toward each other (in other words, the first housing 30 and the second housing 40 relatively rotate close to each other), so that the foldable apparatus 10 is driven to fold. In a folding process, an end that is of the first housing 30 and that is away from the foldable apparatus 10 and an end that is of the second housing 40 and that is away from the foldable apparatus 10 mutually approach, so that the electronic device is in the folded state shown in FIG. 3. In addition, in this embodiment, the electronic device is of a structure in which the flexible display 20 is folded inward. In the folded state, the flexible display 20 is located in space enclosed by the first middle frame and the second middle frame that are folded. In this case, the flexible display 20 is not exposed, the user cannot operate the flexible display 20, and the electronic device is easy to accommodate and carry. In addition, when the foldable apparatus 10 is in the folded state, the first housing 30 and the second housing 40 can rotate (rotation directions are opposite to rotation directions during folding), to drive the foldable apparatus 10 to unfold, so that the electronic device is in the unfolded state shown in FIG. 2. Therefore, in this application, the foldable apparatus 10 is configured to implement folding and unfolding of the electronic device.

A person skilled in the art may understand that the structure shown in embodiments of this application does not constitute a specific limitation on the electronic device. In some other possible implementations of this application, the electronic device may include more or fewer components than those shown in the figure, or combine some components, or split some components, or have different component arrangements.

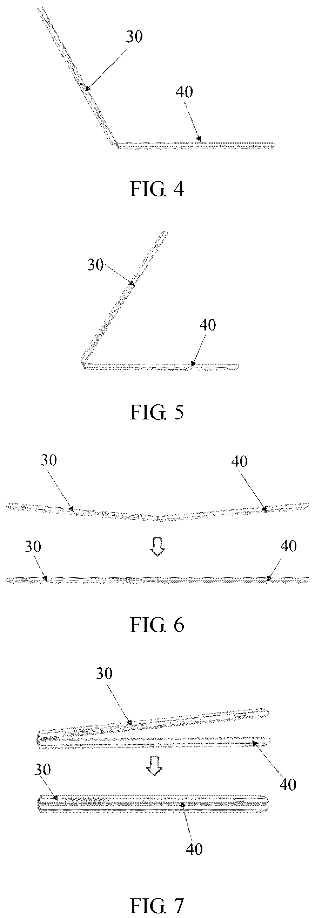

In addition to the unfolded state shown in FIG. 2 and the folded state shown in FIG. 3, the foldable apparatus 10 provided in embodiments of this application can further implement an intermediate state shown in FIG. 4 and FIG. 5, that is, a state between the unfolded state and the folded state, and can stay in the intermediate state.

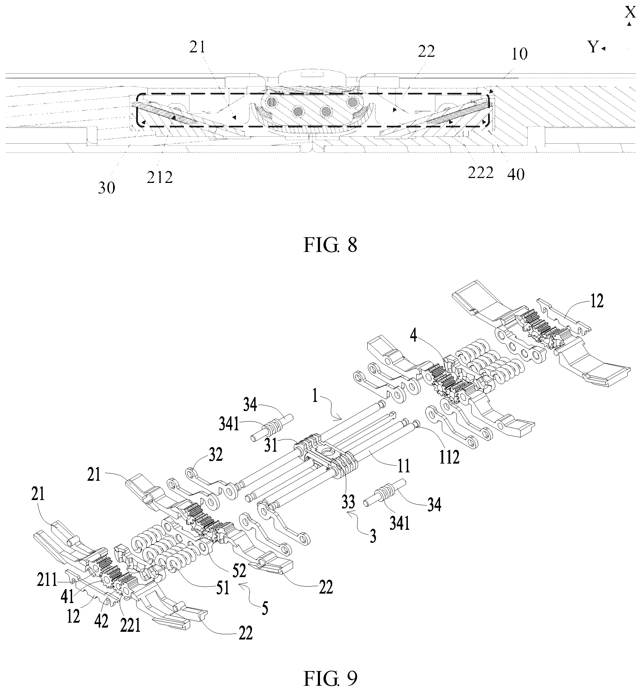

Specifically, as shown in FIG. 9 to FIG. 11, the foldable apparatus 10 includes a main shaft 1, a rotating arm, a synchronization gear assembly 4, a force applying assembly 5, and a damping assembly 3. The rotating arm includes a first rotating arm 21 and a second rotating arm 22 that are arranged along a width direction Y of the main shaft 1. The first rotating arm 21 and the second rotating arm 22 can rotate relative to the main shaft 1, so that the foldable apparatus 10 is in the unfolded state, the folded state, and the intermediate state. The first rotating arm 21 and the second rotating arm 22 are engaged by using the synchronization gear assembly 4, and the synchronization gear assembly 4 is configured to transfer a movement between the first rotating arm 21 and the second rotating arm 22, so that the first rotating arm 21 and the second rotating arm 22 move synchronously in folding and unfolding processes, thereby improving stability and reliability of the foldable apparatus 10 and the electronic device in the unfolding and folding processes. The synchronization gear assembly 4 has a concave-convex surface. The force applying assembly 5 includes an elastic member 51 and a cam 52. The cam 52 has a cam surface. Two ends of the elastic member 51 are respectively elastically connected to two cams 52 along a length direction X of the main shaft 1. The elastic member 51 is in a compressed state, so that the two cams 52 can be driven to have a trend of moving away from each other in the length direction X, that is, the cam surface of the cam 52 is engaged with the concave-convex surface of the synchronization gear assembly 4, and there is pressure between the cam 52 and the synchronization gear assembly 4 engaged with the cam 52.

As shown in FIG. 8, in the electronic device, the first housing 30 and the second housing 40 each are provided with a sliding groove, the first rotating arm 21 is provided with a first sliding block 212, the second rotating arm 22 is provided with a second sliding block 222, the first sliding block 212 fits and slides relative to the sliding groove of the first housing 30, and the second sliding block 222 fits and slides relative to the sliding groove of the second housing 40, to implement synchronous and reverse movement of the first housing 30 and the second housing 40, so that the electronic device is in the unfolded state or the folded state.

The damping assembly 3 includes a first friction plate 31 connected to the main shaft 1. During rotation of the first rotating arm 21 and the second rotating arm 22, when the cam surface of the cam 52 is engaged with the concave-convex surface of the synchronization gear assembly 4, there is pressure between the cam 52 and the synchronization gear assembly 4 engaged with the cam 52, and the pressure can be transferred between the rotating arm and the first friction plate 31. In this way, in a process in which the first rotating arm 21 and the second rotating arm 22 rotate relative to the first friction plate 31, the rotating arm is in direct or indirect contact with the first friction plate 31, so that there is a friction force between the rotating arm and the first friction plate 31. Under the action of the friction force, the foldable apparatus 10 can be kept in the intermediate state, performance of the foldable apparatus 10 and the electronic device can be improved, and a use requirement of the user in the intermediate state is met.

In addition, the foldable apparatus 10 further includes a clutch member. In a process of switching of the foldable apparatus 10 between the unfolded state and the folded state, the clutch member can fit the rotating arm and/or the synchronization gear assembly 4, so that the concave-convex surface of the synchronization gear assembly 4 is disengaged from the cam surface of the cam 52, that is, there is a gap between the concave-convex surface and the cam surface. In this case, an elastic force of the elastic member 51 cannot be applied to the synchronization gear assembly 4 through the cam 52, so that the elastic force of the elastic member 51 cannot be converted into pressure applied between the rotating arm and the first friction plate 31. In a process in which the rotating arm rotates relative to the first friction plate 31, because there is no pressure or the pressure is very small between the rotating arm and the first friction plate 31, a friction force between the rotating arm and the first friction plate 31 is very small, so that an external force required for switching of the foldable apparatus 10 between the unfolded state and the folded state is relatively small, and the user needs only to provide a relatively small closing force or flattening force to implement self-closing or self-flattening of the foldable apparatus 10 and the electronic device. In addition, an external force required for releasing a closed state or a flattened state is also relatively small, thereby improving operation experience.

The main shaft 1 is fastened relative to the first housing 30 and the second housing 40 of the electronic device, and the foldable apparatus 10 is folded or unfolded around the main shaft 1. An extension direction of the main shaft 1 is defined as the length direction X of the main shaft 1. In the electronic device in the unfolded state (referring to FIG. 1), an arrangement direction of the first housing 30 and the second housing 40 is defined as the width direction Y of the main shaft 1. A direction perpendicular to both the length direction X and the width direction Y of the main shaft 1 is defined as a height direction Z of the main shaft 1.

In embodiments of this application, the first friction plate 31 may be in direct or indirect contact with the first rotating arm 21, and the first friction plate 31 may be in direct or indirect contact with the second rotating arm 22. When the first friction plate 31 is in direct contact with the first rotating arm 21 and the second rotating arm 22, two ends of the first friction plate 31 extend toward the first rotating arm 21 and the second rotating arm 22. When the first friction plate 31 is in indirect contact with the first rotating arm 21 and the second rotating arm 22, the first friction plate 31 may be in contact with a component fastened to the first rotating arm 21, and the first friction plate 31 may be in contact with a component fastened to the second rotating arm 22.

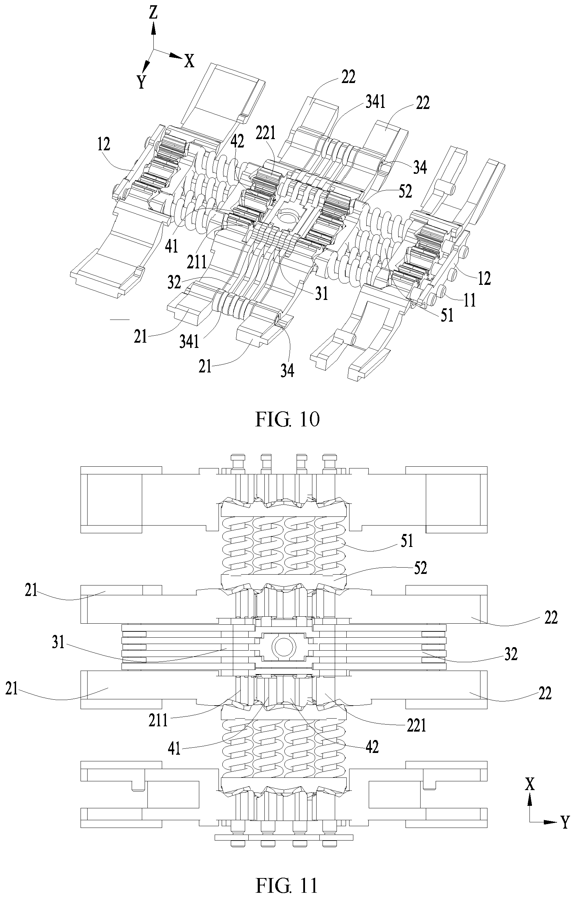

Specifically, as shown in FIG. 10 to FIG. 12, the damping assembly 3 may further include a second friction plate 32. The second friction plate 32 is connected to the first rotating arm 21 and the second rotating arm 22, and is rotatably connected to the first friction plate 31. In this embodiment, the first friction plate 31 is in contact with the second friction plate 32, so that during rotation of the first rotating arm 21 and the second rotating arm 22, when the cam surface of the cam 52 is engaged with the concave-convex surface of the synchronization gear assembly 4, a friction force is generated between the first friction plate 31 and the second friction plate 32, and surfaces of the first friction plate 31 and the second friction plate 32 are in contact. The friction force between the first friction plate 31 and the second friction plate 32 is a sliding friction force, and the friction force is relatively large, and can prevent rotation of the second friction plate 32, thereby preventing rotation of the first rotating arm 21 and the second rotating arm 22, so that the foldable apparatus 10 is kept in the intermediate state. In addition, during rotation of the first rotating arm 21 and the second rotating arm 22, the first friction plate 31 is always in contact with the second friction plate 32. When the cam surface of the cam 52 is engaged with the concave-convex surface of the synchronization gear assembly 4, a friction force always exists between the first friction plate 31 and the second friction plate 32, so that the foldable apparatus 10 can be kept in an intermediate state at any angle.

In this embodiment, the friction force between the first friction plate 31 and the second friction plate 32 prevents the second friction plate 32 from moving, thereby preventing rotation of the first rotating arm 21 and the second rotating arm 22, to keep the foldable apparatus 10 in the intermediate state. In this case, the first friction plate 31 does not need to be in direct contact with the first rotating arm 21 and the second rotating arm 22, so that a size of the first friction plate 31 can be reduced, the first friction plate 31 is easy to arrange, and space of the foldable apparatus 10 occupied by the first friction plate 31 is reduced.

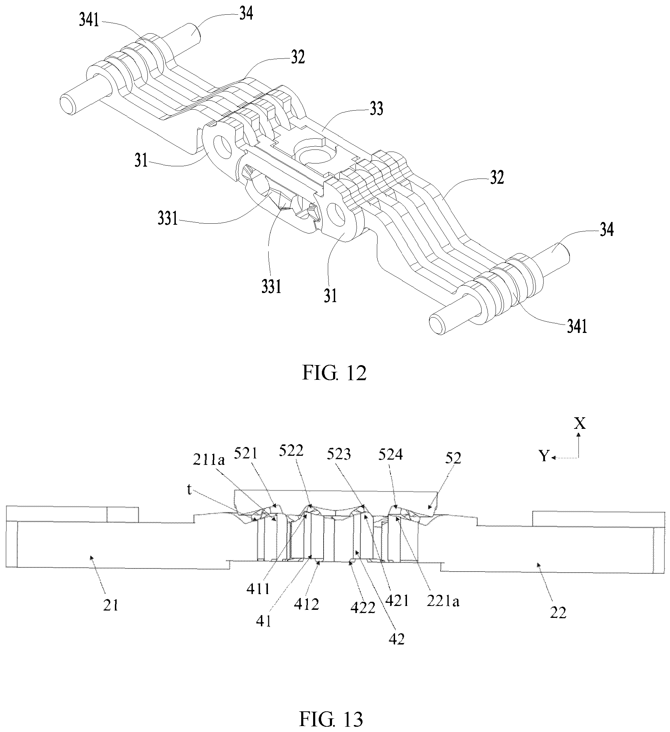

More specifically, as shown in FIG. 12, the damping assembly 3 includes a plurality of second friction plates 32 and a plurality of first friction plates 31, and the second friction plates 32 and the first friction plates 31 are alternately arranged in the length direction X of the foldable apparatus 10, so that a friction force exists between a second friction plate 32 and each of two first friction plates 31 located at two ends of the second friction plate 32 in the length direction X. A combined force of friction forces between the plurality of second friction plates 32 and the plurality of first friction plates 31 is a damping force acting on the first rotating arm 21 and the second rotating arm 22, and the damping force is relatively large, so that rotation of the first rotating arm 21 and the second rotating arm 22 can be effectively limited, and reliability of the foldable apparatus 10 in the intermediate state can be improved. In addition, when the plurality of second friction plates 32 and the plurality of first friction plates 31 are arranged in the length direction X, space occupied in the width direction Y can be reduced, and this helps reduce a dimension of the foldable apparatus 10 in the width direction Y.

In some specific embodiments, a quantity of first friction plates 31 and a quantity of second friction plates 32 in the damping assembly 3 may be changed to change a magnitude of the damping force acting on the first rotating arm 21 and the second rotating arm 22. In some other embodiments, a status (for example, a friction coefficient) of a friction surface between the first friction plate 31 and the second friction plate 32 in the damping assembly 3 may be changed to change a magnitude of the damping force acting on the first rotating arm 21 and the second rotating arm 22. For example, roughness of the first friction plate 31 and/or roughness of the second friction plate 32 may be increased, to increase the friction coefficient between the first friction plate 31 and the second friction plate 32, so as to increase the friction force acting on the first rotating arm 21 and the second rotating arm 22. Alternatively, hardness of a surface of at least one of the second friction plate 32 and the first friction plate 31 may be increased or reduced, or an oil tank configured to store lubricating oil may be disposed on the first friction plate 31 and/or the second friction plate 32, to lubricate the friction surface between the first friction plate 31 and the second friction plate 32, and avoid that the first rotating arm 21 and the second rotating arm 22 cannot continue to rotate because the first friction plate 31 and the second friction plate 32 are stuck due to an excessively large friction force, so that the foldable apparatus 10 can work normally.

As shown in FIG. 6 and FIG. 7, when an included angle between the first rotating arm 21 and the second rotating arm 22 is 160° to 180°, or an included angle between the first rotating arm 21 and the second rotating arm 22 is 0° to 20°, the clutch member fits the rotating arm and/or the synchronization gear assembly 4, so that the concave-convex surface of the synchronization gear assembly 4 is disengaged from the cam surface of the cam 52.

In this embodiment, as shown in FIG. 6, when the included angle between the first rotating arm 21 and the second rotating arm 22 is 160° to 180°, that is, when an included angle between the first housing 30 and the second housing 40 in the electronic device is 160° to 180°, the foldable apparatus 10 is in a near-flattened state. In this case, under the action of the clutch member, the concave-convex surface of the synchronization gear assembly 4 is disengaged from the cam surface of the cam 52, and the elastic force of the elastic member 51 cannot be transferred to the synchronization gear assembly 4 through the cam 52, and therefore cannot be transferred between the rotating arm and the first friction plate 31, so that the friction force between the rotating arm and the first friction plate 31 is eliminated or reduced, and the foldable apparatus 10 can be automatically flattened. Similarly, when the included angle between the first rotating arm 21 and the second rotating arm 22 is 0° to 20°, that is, when an included angle between the first housing 30 and the second housing 40 in the electronic device is 0° to 20°, the foldable apparatus 10 is in a near-folded state. In this case, under the action of the clutch member, the concave-convex surface of the synchronization gear assembly 4 is disengaged from the cam surface of the cam 52, and the elastic force of the elastic member 51 cannot be transferred to the synchronization gear assembly 4 through the cam 52, and therefore cannot be transferred between the rotating arm and the first friction plate 31, so that the friction force between the rotating arm and the first friction plate 31 is eliminated or reduced, and the foldable apparatus 10 can be automatically folded. Therefore, the clutch member in embodiments of this application can improve operation experience of the foldable apparatus 10 and the electronic device in the near-flattened state and the near-folded state.

Certainly, when the foldable apparatus 10 is in the near-flattened state, the included angle between the first rotating arm 21 and the second rotating arm 22 is not necessarily 160° to 180°, and may be another value. When the foldable apparatus 10 is in the near-folded state, the included angle between the first rotating arm 21 and the second rotating arm 22 is not necessarily 0° to 20°, and may be another value. The included angle between the first rotating arm 21 and the second rotating arm 22 in the near-flattened state or the near-folded state is not limited in this application.

In a specific embodiment, as shown in FIG. 9 to FIG. 16, the clutch member fits the synchronization gear assembly 4, to push the synchronization gear assembly 4 to move away from the cam 52 along the length direction X of the main shaft, so that the concave-convex surface and the cam surface are unengaged. Therefore, in this embodiment, when the foldable apparatus 10 is in the near-flattened state or the near-folded state, the clutch member can push the synchronization gear assembly 4 to enable the synchronization gear assembly 4 to move away from the cam 52 along the length direction X, so that a gap t exists between the concave-convex surface of the synchronization gear assembly 4 and the cam surface of the cam 52, as shown in FIG. 13. In this case, the elastic force of the elastic member 51 acts on the cam 52. Because of the gap t, the elastic force cannot act on the synchronization gear assembly 4, and cannot act on the first rotating arm 21 and the second rotating arm 22 that are connected to the synchronization gear assembly 4.

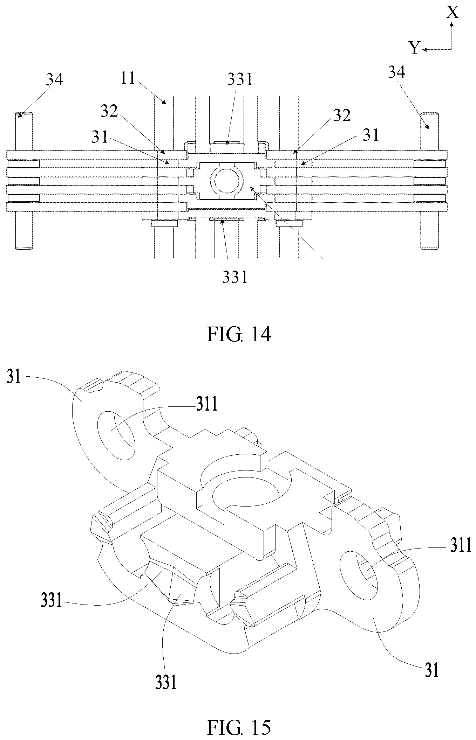

Specifically, as shown in FIG. 13 and FIG. 14, the damping assembly 3 is provided with a driving portion 331, and the synchronization gear assembly 4 is provided with a fitting portion. The driving portion 331 can fit the fitting portion to push the synchronization gear assembly 4 to move away from the cam 52 along the length direction X of the main shaft 1. The clutch member is the driving portion 331, and along the length direction X of the main shaft 1, the fitting portion and the concave-convex surface are disposed at two ends of the synchronization gear assembly 4.

In this embodiment, when the foldable apparatus 10 is in the near-flattened state or the near-folded state, the driving portion 331 of the damping assembly 3 fits the fitting portion of the synchronization gear assembly 4 to push the synchronization gear assembly 4 away from the cam 52, so that the elastic force of the elastic member 51 cannot be transferred to the rotating arm through the cam 52. There is no friction force or the friction force is relatively small between the first friction plate 31 and the second friction plate 32, operation resistance of the foldable apparatus 10 in the near-flattened state or the near-folded state can be reduced, and this helps implement self-flattening and self-folding of the foldable apparatus 10. When the foldable apparatus 10 is in another position (for example, the included angle between the first rotating arm 21 and the second rotating arm 22 is 20° to 160°), the driving portion 331 does not fit the fitting portion. In this case, the concave-convex surface of the synchronization gear assembly 4 is engaged with the cam surface of the cam 52, and the elastic force of the elastic member 51 in the compressed state can be applied to the synchronization gear assembly 4 through the cam 52, and transferred between the second friction plate 32 and the first friction plate 31. A friction force of the second friction plate 32 and the first friction plate 31 provides resistance for rotation of the rotating arm, so that the foldable apparatus 10 is kept in the intermediate state.

As shown in FIG. 9, the synchronization gear assembly 4 includes a first gear 41 and a second gear 42 that are distributed along the width direction Y of the main shaft 1, and the first gear 41 is engaged with the second gear 42. In addition, the first rotating arm 21 is provided with a first tooth portion 211, the second rotating arm 22 is provided with a second tooth portion 221, the first gear 41 is engaged with the first tooth portion 211, and the second gear 42 is engaged with the second tooth portion 221. A fitting portion is disposed on the first gear 41 and/or the second gear 42, that is, the fitting portion may be disposed on either of the first gear 41 and the second gear 42, or may be disposed on the first gear 41 and the second gear 42. In another embodiment, the fitting portion may alternatively be disposed on the first tooth portion 211 of the first rotating arm 21, or may be disposed on the second tooth portion 221 of the second rotating arm 22.

In the embodiment shown in FIG. 13, the first gear 41 is provided with a first fitting portion 412, and the second gear 42 is provided with a second fitting portion 422. In this case, a fitting area of the fitting portion and the driving portion 331 is larger, and fitting reliability is higher, so that reliability of pushing, by the driving portion 331, the synchronization gear assembly 4 to move away from the cam 52 can be improved.

More specifically, as shown in FIG. 14, along the length direction X of the main shaft 1, the driving portion 331 protrudes relative to the damping assembly 3, and includes a first convex surface and a first concave surface. The fitting portion includes a second convex surface and a second concave surface. When the first convex surface fits the second convex surface, the synchronization gear assembly 4 can be pushed to move away from the cam 52 along the length direction X of the main shaft 1.

In this embodiment, the driving portion 331 and the fitting portion are also of a concave-convex structure. In a process in which the rotating arm rotates relative to the main shaft 1, a position in which the driving portion 331 fits the fitting portion can be changed, so that when the first convex surface of the driving portion 331 fits the second convex surface of the fitting portion, the synchronization gear assembly 4 is pushed away from the cam 52. When surfaces other than the first convex surface and the second convex surface fit, the driving portion 331 does not push the synchronization gear assembly 4 away from the cam 52. Therefore, the concave-convex structure of the driving portion 331 and the fitting portion facilitates clutching of the synchronization gear assembly 4 and the cam 52, and the structure is simple.

In a specific embodiment, as shown in FIG. 12, FIG. 14, and FIG. 15, the damping assembly 3 includes a support 33 fastened to the main shaft 1, the first friction plate 31 is fastened to the support 33, and the second friction plate 32 is rotatably connected to the support 33 and the first friction plate 31.

As shown in FIG. 14, the support 33 and the first gear 41 and the second gear 42 that are of the synchronization gear assembly 4 are distributed along the length direction X of the main shaft 1. In this case, the driving portion 331 is disposed at two ends of the support 33 along the length direction X, to facilitate fitting with the fitting portion disposed on the synchronization gear assembly 4.

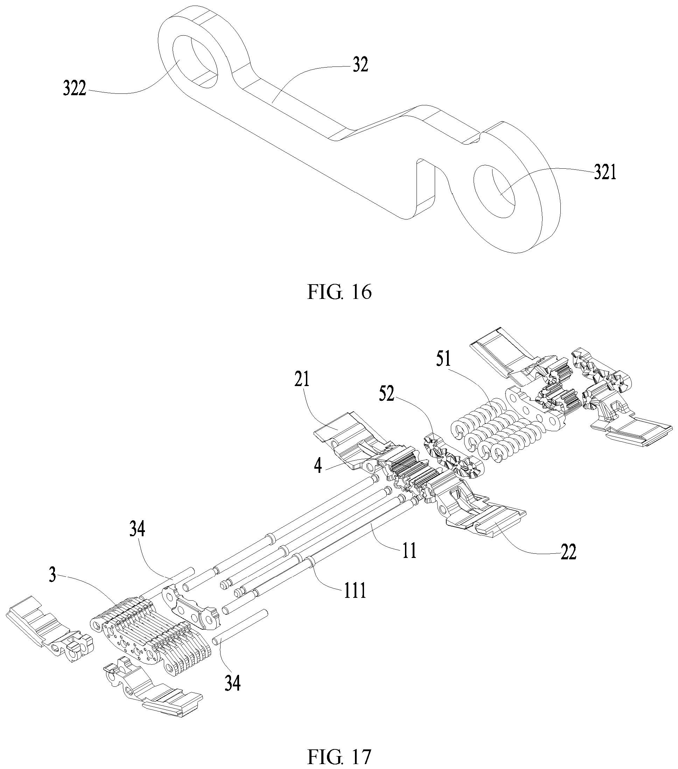

In another specific embodiment, as shown in FIG. 17 to FIG. 20, a first limiting portion 111 is disposed on the main shaft, and a second limiting portion is disposed on the rotating arm and/or the synchronization gear assembly 4. During rotation of the rotating arm, the first limiting portion 111 can fit the second limiting portion to limit movement of the synchronization gear assembly 4 toward the cam 52, thereby limiting engagement between the concave-convex surface of the synchronization gear assembly 4 and the cam surface of the cam 52. The first limiting portion 111 is the clutch member.

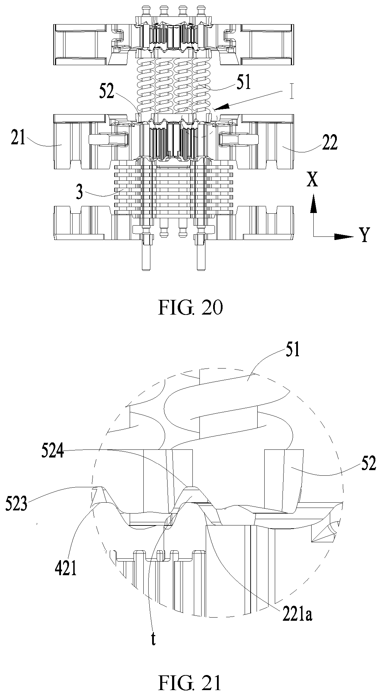

Therefore, in this embodiment, when the foldable apparatus 10 is in the near-flattened state or the near-folded state, the clutch member can limit the synchronization gear assembly 4 and/or the rotating arm from moving toward the cam 52, so that a gap t exists between the concave-convex surface of the synchronization gear assembly 4 and the cam surface of the cam 52, as shown in FIG. 21. In this case, the elastic force of the elastic member 51 acts on the cam 52. Because of the gap t, the elastic force cannot act on the synchronization gear assembly 4, and cannot act on the first rotating arm 21 and the second rotating arm 22 that are connected to the synchronization gear assembly 4. There is no friction force or the friction force is relatively small between the first friction plate 31 and the second friction plate 32, so that operating resistance of the foldable apparatus 10 in the near-flattened state or the near-folded state can be reduced, and this helps implement self-flattening and self-folding of the foldable apparatus 10. When the foldable apparatus 10 is in another position (for example, the included angle between the first rotating arm 21 and the second rotating arm 22 is 20° to 160°), the driving portion 331 does not fit the fitting portion. In this case, the concave-convex surface of the synchronization gear assembly 4 is engaged with the cam surface of the cam 52, and the elastic force of the elastic member 51 in the compressed state can be applied to the synchronization gear assembly 4 through the cam 52, and transferred between the second friction plate 32 and the first friction plate 31. A friction force of the second friction plate 32 and the first friction plate 31 provides resistance for rotation of the rotating arm, so that the foldable apparatus 10 is kept in the intermediate state.

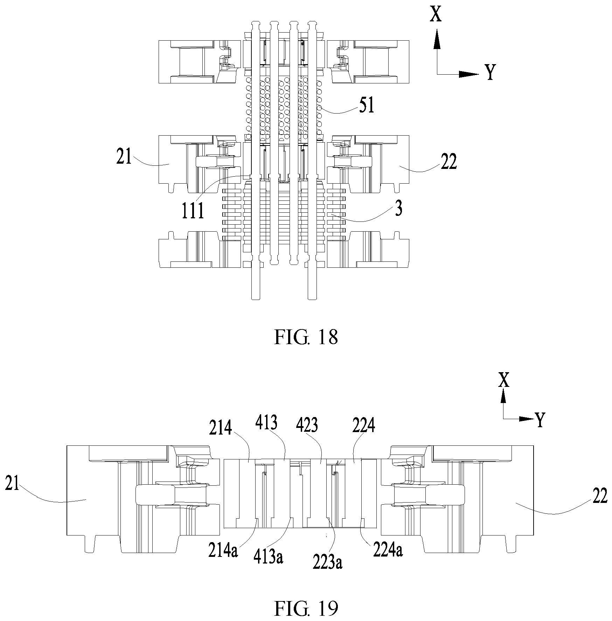

Specifically, as shown in FIG. 17 and FIG. 18, the main shaft 1 includes a plurality of pin shafts 11 distributed along the width direction Y of the main shaft 1, a pin shaft hole is provided on each of the rotating arm and the synchronization gear assembly 4, and the pin shafts 11 respectively pass through pin shaft holes, and can rotate around the pin shafts 11. The first rotating arm 21 is provided with a first pin shaft hole 214, the second rotating arm 22 is provided with a second pin shaft hole 224, the first gear 41 of the synchronization gear assembly 4 is provided with a third pin shaft hole 413, the second gear 42 is provided with a fourth pin shaft hole 423, the main shaft 1 may include four pin shafts 11, and the four pin shafts 11 respectively pass through the first pin shaft hole 214, the third pin shaft hole 413, the fourth pin shaft hole 423, and the second pin shaft hole 224, so that the first rotating arm 21, the second rotating arm 22, the first gear 41, and the second gear 42 respectively rotate around the four pin shafts 11.

In this embodiment, the first limiting portion 111 is disposed on at least a part of the pin shafts 11, and the first limiting portion 111 protrudes outward in a radial direction relative to the pin shaft 11. A limiting step is disposed in at least a part of the pin shaft holes, and the limiting step is the second limiting portion.

In the embodiment shown in FIG. 17 to FIG. 19, a first limiting step 214a is disposed in the first pin shaft hole 214, a third limiting step 413a is disposed in the third pin shaft hole 413, a fourth limiting step 423a is disposed in the fourth pin shaft hole 423, a second limiting step 224a is disposed in the second pin shaft hole 224, and a protruding first limiting portion 111 is disposed on each of the four pin shafts 11. During rotation of the first rotating arm 21 and the second rotating arm 22, when the foldable apparatus 10 is in the near-flattened state or the near-folded state, first limiting portions 111 of the four pin shafts 11 respectively abut against corresponding limiting steps, to limit movement of the synchronization gear assembly 41 toward the cam 52, so that a gap t exists between the cam surface of the cam 52 and the concave-convex surface of the synchronization gear assembly 4.

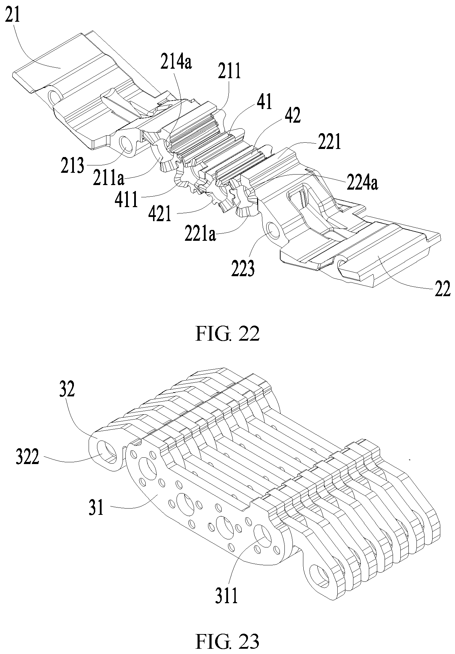

In the foregoing embodiments, as shown in FIG. 13 and FIG. 22, a first concave-convex surface 211a is disposed at an end that is of the first tooth portion 211 and that faces the cam 52, a second concave-convex surface 221a is disposed at an end that is of the second tooth portion 221 and that faces the cam 52, a third concave-convex surface 411 is disposed at an end that is of the first gear 41 and that faces the cam 52, and a fourth concave-convex surface 421 is disposed at an end that is of the second gear 42 and that faces the cam 52. Correspondingly, as shown in FIG. 13, a first cam surface 521, a second cam surface 522, a third cam surface 523, and a fourth cam surface 524 are disposed at an end that is of the cam 52 and that faces the synchronization gear assembly 4, and the first cam surface 521, the second cam surface 522, the third cam surface 523, and the fourth cam surface 524 are distributed along the width direction Y of the main shaft 1.

When the foldable apparatus 10 is in a state other than the near-flattened state and the near-folded state, the cam surface of the cam 52 is engaged with the concave-convex surface of the synchronization gear assembly 4. Specifically, the first concave-convex surface 211a is engaged with the first cam surface 521, the second concave-convex surface 221a is engaged with the fourth cam surface 524, the third concave-convex surface 411 is engaged with the second cam surface 522, and the fourth concave-convex surface 421 is engaged with the third cam surface 523.

In addition, in embodiments of this application, during rotation, the first rotating arm 21 and the second rotating arm 22 further move in the length direction X of the main shaft 1. As shown in FIG. 9 and FIG. 17, the foldable apparatus 10 further includes a guide shaft 34. The guide shaft 34 is configured to guide movement of the first rotating arm 21 and the second rotating arm 22 along the length direction X of the main shaft 1. As shown in FIG. 22, a first guide hole 213 is provided on the first rotating arm 21, a second guide hole 223 is provided on the second rotating arm 22, and a guide shaft 34 is disposed and passes through each of the first guide hole 213 and the second guide hole 223. In addition, as shown in FIG. 16 and FIG. 23, a third guide hole 322 is provided on the second friction plate 32 of the damping assembly 3, and a guide shaft 34 further passes through the third guide hole 322.

In addition, the second friction plate 32 is further provided with a fifth pin shaft hole 321, the first friction plate 31 is provided with a sixth pin shaft hole 311, and the pin shaft 11 passes through the fifth pin shaft hole 321 and the sixth pin shaft hole 311, so that the second friction plate 32 can rotate around the pin shaft 11 that passes through the fifth pin shaft hole 321.

In addition, as shown in FIG. 12, a gasket 341 is disposed on the guide shaft 34 of the damping assembly 3, the gasket 341 is located between two adjacent second friction plates 32, and a dimension of the gasket 34 in the length direction X of the main shaft 1 is the same as a dimension of the first friction plate 31 in the length direction X of the main shaft 1.

In a specific embodiment, as shown in FIG. 9 and FIG. 10, the main shaft 1 may further include a stopper 12, the stopper 12 is fastened to the pin shaft 11 of the main shaft 1, the pin shaft 11 is provided with a mounting slot 112, the stopper 12 is provided with a through hole, the stopper 12 is sleeved on the pin shaft 11 through the through hole, and the stopper 12 is located in the mounting slot 112. Two end surfaces of the mounting slot 112 along the length direction X limit movement of the first stopper 12 relative to the pin shaft 11 along the length direction X. That is, the stopper 12 is a clamping structure, and the clamping structure is clamped to the pin shaft 11, so that the stopper 12 is fastened to the pin shaft 11.

The foregoing descriptions are only specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A foldable apparatus, wherein the foldable apparatus comprises:
a main shaft;
a rotating arm, wherein the rotating arm comprises a first rotating arm and a second rotating arm that are disposed on two sides of the main shaft along a width direction, and the first rotating arm and the second rotating arm are capable of rotating relative to the main shaft, so that the foldable apparatus switches between an unfolded state and a folded state;
a synchronization gear assembly, wherein the synchronization gear assembly is connected to the first rotating arm and the second rotating arm, and the synchronization gear assembly has a concave-convex surface;
a force applying assembly, wherein the force applying assembly comprises a cam and an elastic member, the cam has a cam surface, and two ends of the elastic member are elastically connected to the cam along a length direction of the main shaft, to drive the concave-convex surface to be capable of being engaged with the cam surface;
a damping assembly, wherein the damping assembly comprises a first friction plate connected to the main shaft, and when the concave-convex surface is engaged with the cam surface, the elastic member is capable of applying pressure to the damping assembly, so that the foldable apparatus is kept in an intermediate state under the action of a friction force between the first friction plate and the rotating arm; and
a clutch member, wherein in a process in which the foldable apparatus switches between the unfolded state and the folded state, the clutch member is capable of fitting the rotating arm and/or the synchronization gear assembly, so that the concave-convex surface is disengaged from the cam surface.

2. The foldable apparatus according to claim 1, wherein the clutch member comprises a driving portion, and in the process in which the foldable apparatus switches between the unfolded state and the folded state, the driving portion is capable of fitting the synchronization gear assembly to push the synchronization gear assembly to move away from the cam along the length direction of the main shaft, so that the concave-convex surface is disengaged from the cam surface.

3. The foldable apparatus according to claim 2, wherein the driving portion is disposed on the damping assembly, the synchronization gear assembly is provided with a fitting portion, and the driving portion is capable of fitting the fitting portion to push the synchronization gear assembly to move away from the cam along the length direction of the main shaft; and
along the length direction of the main shaft, the fitting portion and the concave-convex surface are disposed at two ends of the synchronization gear assembly.

4. The foldable apparatus according to claim 3, wherein the driving portion protrudes relative to the damping assembly along the length direction of the main shaft, the driving portion comprises a first convex surface and a first concave surface, the fitting portion comprises a second convex surface and a second concave surface, and when the first convex surface fits the second convex surface, the synchronization gear assembly is capable of being pushed to move away from the cam along the length direction of the main shaft.

5. The foldable apparatus according to claim 3, wherein the damping assembly comprises a support fastened to the main shaft, and the first friction plate is mounted on the support; and
the driving portion is disposed on the support.

6. The foldable apparatus according to claim 3, wherein the synchronization gear assembly comprises a first gear and a second gear that are disposed along the width direction of the main shaft, the first gear is engaged with the second gear, the first rotating arm has a first tooth portion, the second rotating arm has a second tooth portion, the first gear is engaged with the first tooth portion, and the second gear is engaged with the second tooth portion; and
the fitting portion is disposed on the first gear and/or the second gear.

7. The foldable apparatus according to claim 1, wherein the clutch member comprises a first limiting portion, a second limiting portion is disposed on the rotating arm and/or the synchronization gear assembly, and in the process in which the foldable apparatus switches between the unfolded state and the folded state, the first limiting portion is capable of fitting the second limiting portion, to limit the synchronization gear assembly from moving toward the cam.

8. The foldable apparatus according to claim 7, wherein the main shaft comprises a plurality of pin shafts distributed along the width direction of the main shaft, the rotating arm and the synchronization gear assembly each are provided with a pin shaft hole, the pin shafts respectively pass through corresponding pin shaft holes, and the first limiting portion is provided on at least a part of the pin shafts.

9. The foldable apparatus according to claim 8, wherein the first limiting portion protrudes outward along a radial direction relative to the pin shaft, a limiting step is disposed in at least a part of the pin shaft holes, and the limiting step is the second limiting portion.

10. The foldable apparatus according to any one of claims 1 to 9, wherein when an included angle between the first rotating arm and the second rotating arm is 160° to 180°, or an included angle between the first rotating arm and the second rotating arm is 0° to 20°, the clutch member fits the synchronization gear assembly or the rotating arm, so that the concave-convex surface is disengaged from the cam surface.

11. The foldable apparatus according to any one of claims 1 to 9, wherein the damping assembly further comprises a second friction plate, an end of the second friction plate is connected to the rotating arm, another end of the second friction plate is connected to the first friction plate, and the second friction plate is capable of rotating relative to the first friction plate under driving of the rotating arm; and
when the concave-convex surface is engaged with the cam surface, the elastic member is capable of applying pressure to the damping assembly, so that the foldable apparatus is kept in the intermediate state under the action of a friction force between the first friction plate and the second friction plate.

12. The foldable apparatus according to any one of claims 1 to 9, wherein the damping assembly further comprises a guide shaft extending along the length direction of the main shaft, the rotating arm has a guide hole, and the guide shaft passes through the guide hole, so that the rotating arm is capable of moving along the guide shaft.

13. An electronic device, wherein the electronic device comprises a screen and the foldable apparatus according to any one of claims 1 to 12.
